# EUROPEAN PATENT APPLICATION

(11) **EP 4 779 265 A1**
(43) Date of publication of application: **22.07.2026**
(21) Application number: 25218720.8
(22) Date of filing: 26.11.2025
(51) Int. Cl.: G01C 21/26, G01C 21/36

(54) **SIGNAL GENERATION SYSTEM, COMPUTING DEVICE, AND SIGNAL GENERATION METHOD**

(30) Priority: 24.12.2024 JP 2024227826
(71) Applicant: Toyota Jidosha Kabushiki Kaisha, Toyota-shi, Aichi-ken 471-8571 (JP)
(72) Inventor: UDATE, Masateru, Chuo- Ku, 103-0022 (JP); TSUZUKI, Yuta, Chuo- Ku, 103-0022 (JP)
(74) Representative: D Young & Co LLP

(57) **Abstract**

A signal generation system includes a first computing device configured to generate a trajectory signal representing a planned trajectory of a vehicle; and a second computing device configured to generate an output word signal representing word information to be given to an occupant of the vehicle, by inputting an input word signal representing an utterance of the occupant in natural language format into a trained language model. At least one of the first computing device and the second computing device converts at least one of the sensor signal and a signal generated based on the sensor signal to a trajectory data signal represented in a format that can be inputted into the trained language model. The second computing device generates a trajectory word signal related to the planned trajectory as the output word signal, based on the trajectory data signal.

## Description

### FIELD

The present disclosure relates to a signal generation system, a computing device, and a signal generation method for generating an output word signal representing word information to be given to a vehicle occupant.

### BACKGROUND

There is a driverless vehicle in which a travel controller executes at least some of driving operation, such as acceleration, deceleration, and steering of the vehicle. A notification in a natural language about driving control by a travel controller can reassure a vehicle occupant even when executed driving operation differs from the vehicle occupant's (e.g., driver's) intention.

International Publication No. 2024/202905 (Patent Literature 1) describes a control device that recognizes an object outside a moving body, based on an image captured by an image capture device, and that notifies a user of a risky object that may approach the moving body, using a natural language.

### SUMMARY

The control device described in Patent Literature 1 gives notification to a user independently of driving control. Thus, notification to the user may not correspond to actual driving control, and may actually confuse the user.

An object of the present disclosure is to provide a signal generation system that appropriately generates an output word signal representing word information related to travel of a vehicle.

The following is a summary of the present disclosure.
(1) A signal generation system including:
   a first computing device configured to generate a trajectory signal representing a planned trajectory of a vehicle, based on a sensor signal outputted from a sensor mounted on the vehicle; and
   a second computing device configured to generate an output word signal representing word information to be given to an occupant of the vehicle, by inputting an input word signal representing an utterance of the occupant in natural language format into a trained language model, wherein
   at least one of the first computing device and the second computing device converts at least one of the sensor signal and a signal generated based on the sensor signal to a trajectory data signal represented in a format that can be inputted into the trained language model, and
   the second computing device generates a trajectory word signal related to the planned trajectory as the output word signal, based on the trajectory data signal.
(2) The signal generation system according to (1), wherein
   the signal generated based on the sensor signal includes the trajectory signal or a control signal for control of the vehicle based on the trajectory signal.
(3) The signal generation system according to (2), wherein the format that can be inputted into the trained language model is natural language format.
(4) The signal generation system according to (3), wherein
   when the trajectory signal or the control signal includes a signal related to a predetermined action of the vehicle, at least one of the first computing device and the second computing device adds, at conversion, a request signal to the trajectory data signal, the request signal requesting that the trajectory word signal be given additional information corresponding to the predetermined action.
(5) The signal generation system according to (1) or (2), wherein the trained language model includes an embedding unit that converts the input word signal to vector-format input vector data, and an output unit that outputs the output word signal, based on the input vector data, and
   the format that can be inputted into the trained language model is vector format.
(6) The signal generation system according to any one of (1) to (5), wherein
   at least one of the first computing device and the second computing device adjusts the trained language model so as to be adapted to the trajectory data signal.
(7) The signal generation system according to any one of (1) to (6), wherein
   the signal generated based on the sensor signal includes an intermediate signal generated in a process of generating the trajectory signal.
(8) A computing device including a processor configured to:
   generate a first output word signal representing word information to be given to an occupant of a vehicle, by inputting an input word signal representing an utterance of the occupant in natural language format into a trained language model;
   convert at least one of a sensor signal outputted from a sensor mounted on the vehicle and a signal generated based on the sensor signal to a trajectory data signal represented in a format that can be inputted into the trained language model; and
   generate a trajectory word signal related to a planned trajectory of the vehicle as a second output word signal, by inputting the trajectory data signal into the trained language model as the input word signal.
(9) A computing device including a processor configured to:
   generate a trajectory signal representing a planned trajectory of a vehicle, based on a sensor signal outputted from a sensor mounted on the vehicle; and
   convert at least one of the sensor signal and a signal generated based on the sensor signal to a trajectory data signal represented in natural language format or vector format.
(10) A signal generation method including:
   generating a trajectory signal representing a planned trajectory of a vehicle, based on a sensor signal outputted from a sensor mounted on the vehicle;
   generating an output word signal representing word information to be given to an occupant of the vehicle, by inputting an input word signal representing an utterance of the occupant in natural language format into a trained language model;
   converting at least one of the sensor signal and a signal generated based on the sensor signal to a trajectory data signal represented in a format that can be inputted into the trained language model; and
   generating a trajectory word signal related to the planned trajectory as the output word signal, by inputting the trajectory data signal into the trained language model as the input word signal.

The signal generation system of the present disclosure can generate an output word signal representing word information to be given to a vehicle occupant without a dedicated ECU.

### BRIEF DESCRIPTION OF DRAWINGS

FIG. 1 schematically illustrates the configuration of a vehicle equipped with a signal generation system.
FIG. 2 schematically illustrates the hardware of a first computing device.
FIG. 3 schematically illustrates the hardware of a second computing device.
FIG. 4 illustrates an overview of how the signal generation system operates.
FIG. 5 illustrates a planned trajectory.
FIG. 6 illustrates an example of display based on a trajectory word signal.

### DESCRIPTION OF EMBODIMENTS

A signal generation system that appropriately generates an output word signal representing word information related to travel of a vehicle will now be described in detail with reference to the drawings.

A signal generation system of the present embodiment includes first and second computing devices. The first computing device is configured to generate a trajectory signal representing a planned trajectory of a vehicle, based on a sensor signal outputted from a sensor mounted on the vehicle. The second computing device is configured to generate an output word signal representing word information to be given to an occupant of the vehicle, by inputting an input word signal representing an utterance of the occupant in natural language format into a trained language model. The trained language model is configured to generate a series of words (sentences), based on the probabilities of occurrence of words in sentences, and is constructed in advance with a large amount of language data. The second computing device inputs a trajectory data signal into the trained language model as the input word signal; the trajectory data signal is converted from at least one of the sensor signal and a signal generated based on the sensor signal, and is represented in a format that can be inputted into the trained language model. In this case, the second computing device generates a trajectory word signal related to the planned trajectory as the output word signal.

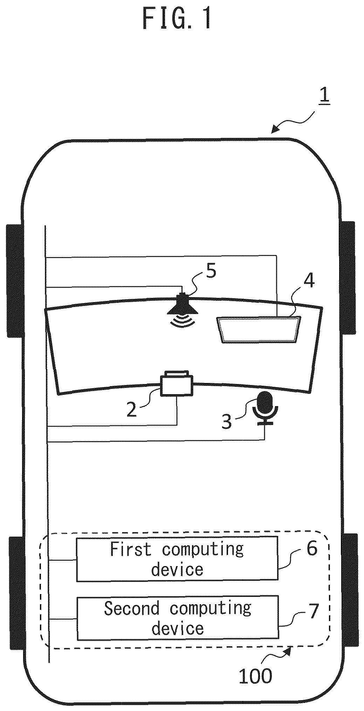

FIG. 1 schematically illustrates the configuration of a vehicle equipped with the signal generation system.

The vehicle 1 of the present embodiment includes a surroundings camera 2, a microphone device 3, a display device 4, a speaker device 5, a first computing device 6, and a second computing device 7. The signal generation system 100 includes the first computing device 6 and the second computing device 7.

The surroundings camera 2 is communicably connected to the first computing device 6 via an in-vehicle network conforming to a standard such as a controller area network. The microphone device 3, the display device 4, the speaker device 5, and the first computing device 6 are communicably connected to the second computing device 7 via the in-vehicle network.

The surroundings camera 2 is an example of a sensor that generates time-series surroundings images representing the surroundings of the front of the vehicle 1. The surroundings camera 2 includes a two-dimensional detector constructed from an array of optoelectronic transducers, such as CCD or C-MOS, having sensitivity to visible light and a focusing optical system that forms an image of a target region on the two-dimensional detector. The surroundings camera 2 is installed, for example, in a front upper area in the vehicle interior and oriented in the travel direction of the vehicle 1. The surroundings camera 2 takes a picture of the surroundings of the front of the vehicle 1 through the windshield every predetermined capturing period (e.g., 1/30 to 1/10 seconds), and outputs surroundings images representing the surroundings as data to the first computing device 6. The surroundings images may be outputted in video format.

As the sensor, the vehicle 1 may further include at least one of the following: a light detection and ranging (LiDAR) sensor, a radio detection and ranging (RADAR) sensor, a millimeter-wave sensor, an ultrasonic sensor, a global navigation satellite system (GNSS) receiver, an inertial measurement unit (IMU), a microphone outside the vehicle, and a vehicle state sensor. A vehicle state sensor outputs data depending on the state of the vehicle, such as the vehicle speed, steering angle, and amounts of depression of the brake pedal and accelerator pedal.

The microphone device 3 is an example of a vehicle interior sensor that generates time-series voice data depending on a voice in the interior of the vehicle 1. A voice in the vehicle interior may be, for example, an utterance of an occupant of the vehicle 1. The microphone device 3 outputs voice data corresponding to an utterance of a vehicle occupant to the second computing device 7.

The display device 4 is an example of an output device, and includes, for example, a liquid crystal display. The display device 4 shows various types of visual information so as to be visible to occupants of the vehicle 1. Information shown on the display device 4 includes word information represented in an output word signal received from the second computing device 7 via the in-vehicle network. The display device 4 may be disposed so as to be visible to the driver, for example, in front of the driver's seat of the vehicle 1 on which the driver is sitting. The display device 4 may be referred to as a meter display.

The speaker device 5 is another example of an output device, and includes, for example, an amplifier and a speaker unit. The speaker device 5 outputs various types of voice information so as to be audible to occupants of the vehicle 1. Information outputted by the speaker device 5 includes word information represented in an output word signal received from the second computing device 7 via the in-vehicle network. The speaker device 5 may be disposed so as to be audible to the driver, for example, in front of the driver's seat of the vehicle 1 on which the driver is sitting.

The first computing device 6 detects an object in the vicinity of the vehicle 1 from an surroundings image obtained from the surroundings camera 2, generates a trajectory signal representing a planned trajectory of the vehicle 1, based on the position of the detected object, and outputs the signal to a travel controller (not illustrated) via the in-vehicle network. The travel controller generates a control signal for making the vehicle 1 travel along a planned trajectory represented in a trajectory signal obtained from the first computing device 6, and outputs the signal to a travel mechanism (not illustrated) of the vehicle 1. The travel mechanism includes, for example, an engine or a motor for powering the vehicle 1, brakes for decelerating the vehicle 1, and a steering mechanism for steering the vehicle 1.

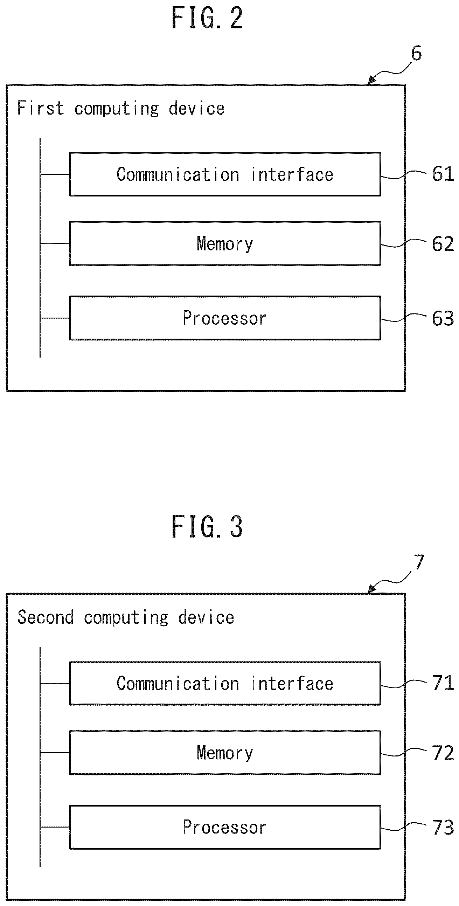

FIG. 2 schematically illustrates the hardware of the first computing device 6. The first computing device 6 includes a communication interface 61, a memory 62, and a processor 63. The first computing device 6 may be implemented as an electronic control unit (ECU).

The communication interface 61 is an example of a communication unit, and includes a communication interface circuit for connecting the first computing device 6 to the in-vehicle network. The communication interface 61 provides received data to the processor 63, and outputs data provided from the processor 63 to an external device.

The memory 62 includes volatile and nonvolatile semiconductor memories. The memory 62 stores various types of data used for processing by the processor 63, e.g., parameters of a neural network that operates as a classifier for detecting an object from a surroundings image. The memory 62 also stores various application programs executed by the processor 63, e.g., a trajectory generation computer program for executing a trajectory generation process.

The processor 63 is an example of a control unit, and includes one or more processors and a peripheral circuit thereof. The processor 63 may further include another operating circuit, such as a logic unit, an arithmetic unit, or a graphics processing unit.

The second computing device 7 generates an output word signal by inputting voice data obtained from the microphone device 3 into a trained language model, and outputs the signal to at least one of the display device 4 and the speaker device 5 via the in-vehicle network. The display device 4 and the speaker device 5 can output visual information and voice information, respectively, based on an output word signal obtained from the second computing device 7.

FIG. 3 schematically illustrates the hardware of the second computing device 7. The second computing device 7 includes a communication interface 71, a memory 72, and a processor 73. The second computing device 7 may be implemented as an ECU.

The communication interface 71 is an example of a communication unit, and includes a communication interface circuit for connecting the second computing device 7 to the in-vehicle network. The communication interface 71 provides received data to the processor 73, and outputs data provided from the processor 73 to an external device.

The memory 72 includes volatile and nonvolatile semiconductor memories. The memory 72 stores various types of data used for processing by the processor 73, e.g., parameters of a trained language model for generating an output word signal based on an input word signal. The memory 72 also stores various application programs executed by the processor 73, e.g., a word generation computer program for executing a word generation process.

The processor 73 is an example of a control unit, and includes one or more processors and a peripheral circuit thereof. The processor 73 may further include another operating circuit, such as a logic unit, an arithmetic unit, or a graphics processing unit.

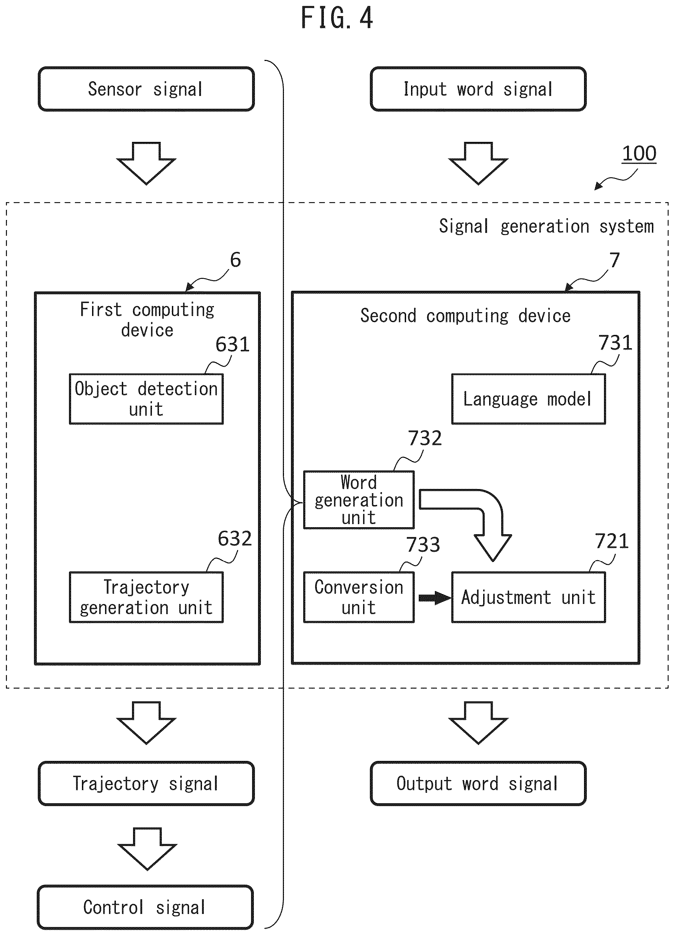

FIG. 4 illustrates an overview of how the signal generation system 100 operates.

As its functional blocks, the processor 63 of the first computing device 6 included in the signal generation system 100 includes an object detection unit 631 and a trajectory generation unit 632. These units included in the processor 63 are functional modules implemented by a program executed by the processor 63. The computer program that achieves the functions of the units of the processor 63 may be provided in a form recorded on a computerreadable portable storage medium, such as a semiconductor memory, a magnetic medium, or an optical medium. Alternatively, the units included in the processor 63 may be implemented in the first computing device 6 as separate integrated circuits, microprocessors, or firmware.

The object detection unit 631 detects an object from a sensor signal outputted from a sensor mounted on the vehicle 1 (e.g., a surroundings image outputted from the surroundings camera 2) by inputting the sensor signal into a classifier that is pre-trained to detect an object from a sensor signal.

The classifier may be, for example, a convolutional neural network (CNN) including multiple convolution layers connected in series from an input side toward an output side, such as Single Shot MultiBox Detector or Faster R-CNN. A CNN operates as a classifier for detecting an object from a sensor signal by being pre-trained according to a predetermined training technique, such as backpropagation, using images including detection targets as training data.

Further, the object detection unit 631 estimates the real-space position of the detected object, using the current position and orientation of the vehicle 1, the direction of the detected object viewed from the vehicle 1, and an estimated distance from the vehicle 1 to the object.

The object detection unit 631 can identify the current position of the vehicle 1, for example, using a positioning signal generated based on GNSS signals from GNSS satellites received at predetermined intervals by a global navigation satellite system (GNSS) receiver (not illustrated) mounted on the vehicle 1.

The object detection unit 631 can identify the orientation of the vehicle 1 by detecting features such as lane lines from a surroundings image and comparing the detected features with corresponding features represented in map data stored in a storage device (not illustrated).

The object detection unit 631 can identify the direction of the detected object viewed from the vehicle 1, for example, using the position of the detected object in the surroundings image, the focal length of the focusing optical system of the surroundings camera 2, the inclination of the optical axis of the focusing optical system of the surroundings camera 2 relative to the travel direction of the vehicle 1.

The object detection unit 631 can estimate the distance from the vehicle 1 to the object, for example, based on a reference size of the object in the real space, the size of an object region represented in the surroundings image, and internal parameters of the surroundings camera 2. For each type of object, the reference size of the object in the real space may be prestored in the memory 62. The object detection unit 631 can search the memory 62, using the type of the object outputted from the classifier into which the surroundings image is inputted, and identify the real-space size of the object represented in the surroundings image. The internal parameters of the surroundings camera 2 include, for example, the focal length of the focusing optical system of the surroundings camera 2 and the pixel size of the surroundings image.

The trajectory generation unit 632 makes a planned trajectory so that the distance to the detected object will be greater than a predetermined distance, generates a trajectory signal representing the planned trajectory, and outputs the signal to the travel controller (not illustrated) via the in-vehicle network.

As its functional blocks, the processor 73 of the second computing device 7 included in the signal generation system 100 includes a word generation unit 731, a conversion unit 732, and an adjustment unit 733. These units included in the processor 73 are functional modules implemented by a program executed by the processor 73. The computer program that achieves the functions of the units of the processor 73 may be provided in a form recorded on a computerreadable portable storage medium, such as a semiconductor memory, a magnetic medium, or an optical medium. Alternatively, the units included in the processor 73 may be implemented in the second computing device 7 as separate integrated circuits, microprocessors, or firmware.

The word generation unit 731 generates an output word signal by inputting an input word signal representing an utterance of an occupant of the vehicle 1 in natural language format (e.g., text data converted from voice data obtained from the microphone device 3) into a trained language model 721 defined by parameters stored in the memory 72.

An input word signal is code data obtained by converting an occupant's utterance into text. The word generation unit 731 can convert an utterance included in voice data obtained from the microphone device 3 into text, by inputting the voice data into a speech recognizer. The speech recognizer can be configured, for example, with a speech recognition model such as a Gaussian mixture model-hidden Markov model (GMM-HMM) or a deep neural network-hidden Markov model (DNN-HMM). Parameters defining the speech recognition model may be stored in the memory 72.

The trained language model 721 is configured to generate a series of words (sentences) depending on an input word signal. The trained language model 721 may include, for example, deep learning architecture including an attention mechanism for determining a portion of inputted data that should be noted, such as Transformer.

The word generation unit 731 outputs an output word signal obtained by the trained language model 721 to at least one of the display device 4 and the speaker device 5 via the in-vehicle network.

The conversion unit 732 converts at least one of a sensor signal outputted from a sensor mounted on the vehicle 1 and a signal generated based on the sensor signal to a trajectory data signal represented in a format that can be inputted into the trained language model 721.

The sensor signal is, for example, a surroundings image generated by the surroundings camera 2. The sensor signal may be generated by a sensor such as a LiDAR sensor, a RADAR sensor, a millimeter-wave sensor, an ultrasonic sensor, a GNSS receiver, an IMU, a microphone outside the vehicle, and a vehicle state sensor.

The signal generated based on the sensor signal may be an intermediate signal generated in a process of the first computing device 6 generating a trajectory signal based on the sensor signal. The intermediate signal may be information indicating the position of an object detected in the vicinity of the vehicle 1 (e.g., a structure, another vehicle, or a pedestrian), the position of a lane line, the state of the road surface, weather, or the like. An intermediate signal may also be referred to as recognition data of the surroundings of the vehicle 1 recognized by the first computing device 6. In the signal generation system 100, conversion of a signal including an intermediate signal to a trajectory data signal by the conversion unit 732 enables information on the reason for generating the planned trajectory to be included more reliably in a trajectory word signal generated by the trained language model 721.

The signal generated based on the sensor signal may be a trajectory signal generated by the first computing device 6 or a control signal generated based on the trajectory signal by the travel controller. In the signal generation system 100, conversion of a signal including a trajectory signal or a control signal to a trajectory data signal by the conversion unit 732 enables information on the planned trajectory to be included more reliably in a trajectory word signal generated by the trained language model 721.

The conversion unit 732 may select a signal to be used for conversion to a trajectory data signal from the sensor signal and a signal generated based on the sensor signal. Alternatively, the conversion unit 732 need not make such selection when the conversion unit 732 is configured so that only a sensor signal or a signal generated based on the sensor signal, whichever is used for conversion to a trajectory data signal, is inputted.

The conversion unit 732 may convert at least one of the sensor signal and a signal generated based on the sensor signal to a trajectory data signal represented in natural language format. Natural language format is an example of a format that can be inputted into the trained language model 721.

The conversion unit 732 converts the obtained data to a natural language, and generates an instruction sentence in natural language format from words and numerical information (e.g., position information) included in the converted natural language. When the obtained data is a numerical value, the conversion unit 732 may convert the obtained data to text, using an expression representing the correspondence between text and numerical values in the data. The conversion unit 732 may convert the obtained data to text, using a table representing such a correspondence. An instruction sentence is a sentence for instructions to output an output word signal based on words and numerical information, and may also be referred to as a "prompt."

The conversion unit 732 can make an instruction sentence, for example, by changing a portion describing a specific situation in a sentence used for describing the situation of travel of a vehicle to a specific word or number corresponding to the situation of travel of the vehicle 1.

For example, the conversion unit 732 may make instruction sentences by changing the wording in parentheses of the following description template to words or numbers obtained by using at least one of the sensor signal and a signal generated based on the sensor signal: "The host vehicle is traveling in (position of lane being traveled) of (road type) at (vehicle speed). The road ahead is (straight/curved left/curved right). (Number) (type of object) is/are recognized in (direction) at (distance) from the host vehicle. (Type of object) is moving in (direction) at (speed). The host vehicle is going to travel so that (details of planned trajectory)."

To generate a trajectory word signal more accurately, the conversion unit 732 may add a predetermined sentence to the instruction sentences. For example, the conversion unit 732 may add a sentence such as "Explain the plan for travel after a couple of seconds clearly." to the instruction sentences.

The conversion unit 732 may add a sentence depending on the obtained data to the instruction sentences so that a more detailed trajectory word signal will be outputted from the trained language model 721. For example, when future actions of the vehicle represented in the obtained data include braking, the conversion unit 732 may add a sentence such as "Explain the plan for travel after a couple of seconds in detail." or "Explain the reason for braking." to the instruction sentences. In this way, the signal generation system 100 can easily make the trained language model 721 generate a trajectory word signal including an explanation of the reason why the vehicle 1 is going to perform a predetermined action that is likely to be recognized by occupants of the vehicle 1, such as braking or a sudden turn. A signal corresponding to such a sentence to be added to an instruction sentence to make a request for adding information (giving additional information) to a trajectory word signal may also be referred to as a request signal.

The conversion unit 732 may make an instruction sentence so that a trajectory word signal including the reasons for all the actions of the vehicle 1 will be generated. Alternatively, the conversion unit 732 may make such an instruction sentence only when particular control related to a predetermined action of the vehicle 1 is executed (when the obtained data includes a signal related to a predetermined action). Making an instruction sentence only when particular control is executed enables the signal generation system 100 to prevent the trajectory word signal from being redundant.

An output word signal generated based on an utterance of an occupant of the vehicle 1 may be referred to as a first output word signal. A trajectory word signal generated based on the sensor signal and a signal generated based on the sensor signal may be referred to as a second output word signal.

The adjustment unit 733 adjusts the trained language model 721 so as to be adapted to the trajectory data signal. For example, in parallel with the trained language model 721, the adjustment unit 733 includes a difference model that can output the difference between an output word signal depending on an input word signal corresponding to an utterance of an occupant of the vehicle 1 and an output word signal depending on a trajectory data signal generated by the conversion unit 732. In this case, the word generation unit 731 inputs a trajectory data signal into the trained language model 721 and the difference model, and determines the sum of their output as an output word signal.

Parameters specifying the difference model may be stored in the memory 72. The difference model can be configured, for example, by Low-rank adaptation (LoRA). The difference model may be configured by another technique such as MoRA or Weight-decomposed low-rank adaptation (DoRA).

In the present embodiment, the conversion unit 732 and the adjustment unit 733 are configured as functional blocks included in the processor 73 of the second computing device 7; however, at least one of them may be configured as a functional block included in the processor 63 of the first computing device 6.

The trained language model 721 adjusted by the adjustment unit 733 can output a more appropriate output word signal based on a trajectory data signal. When the trained language model 721 before adjustment can output a sufficiently appropriate output word signal based on a trajectory data signal, the signal generation system 100 need not include the adjustment unit 733.

By the signal generation method described above, the signal generation system 100 can appropriately generate an output word signal representing word information related to travel of a vehicle.

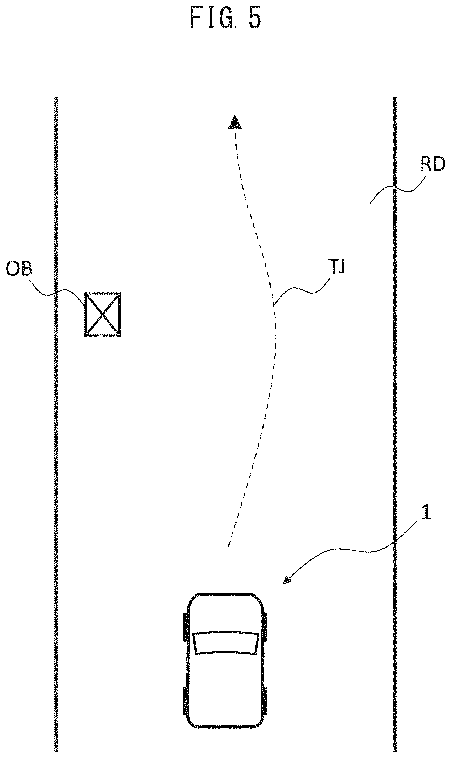

FIG. 5 illustrates a planned trajectory. FIG. 5 illustrates the vehicle 1 traveling on a road RD viewed from above.

The object detection unit 631 of the first computing device 6 detects an object OB on the road RD ahead in the travel direction of the vehicle 1 from a surroundings image outputted from the surroundings camera 2. The trajectory generation unit 632 of the first computing device 6 makes a planned trajectory TJ so that the distance to the detected object OB will be greater than a predetermined distance.

The conversion unit 732 converts at least one of the surroundings image and a signal generated based on the surroundings image to a trajectory data signal. The word generation unit 731 of the second computing device 7 generates a trajectory word signal related to the planned trajectory, based on the trajectory data signal.

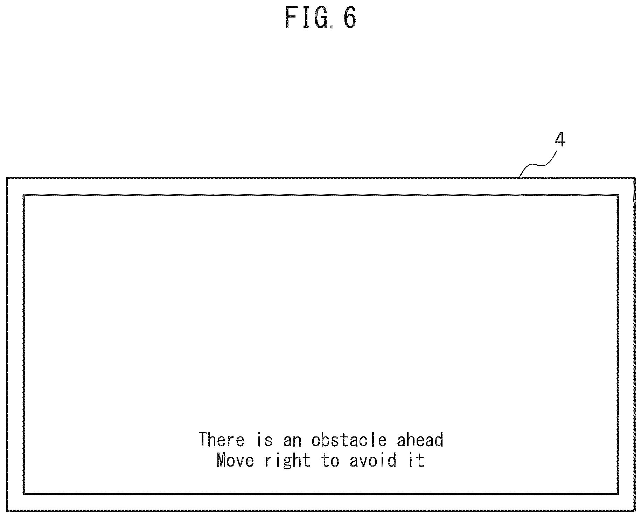

FIG. 6 illustrates an example of display based on a trajectory word signal.

The display device 4 shows word information represented in a trajectory word signal received from the second computing device 7 as an output word signal so as to be visible. The word information is shown at the bottom center of display of the display device 4 as an example; however, the position and format of display are not limited thereto.

Such a signal generation system can appropriately generate an output word signal representing word information related to travel of a vehicle, and appropriately transmit information on travel of the vehicle to the vehicle driver.

According to a modified example, the trained language model 721 includes an embedding unit that converts an input word signal to vector-format input vector data, and an output unit that outputs an output word signal, based on the input vector data.

The embedding unit can convert an input word signal to input vector data by dividing the signal into tokens, which are minimum units of word information, and converting the tokens to numerical values. Vector-format data may also be referred to as tensor data.

The output unit can output an output word signal by grasping the context of the input word signal, based on the input vector data, generating vector-format output vector data, and converting the output vector data to text data.

The conversion unit 732 converts at least one of the sensor signal and a signal generated based on the sensor signal to a vector-format trajectory data signal. A vector-format trajectory data signal is represented in a format that can be inputted into the trained language model 721. The word generation unit 731 inputs the vector-format trajectory data signal into the output unit of the trained language model 721 as input vector data.

For example, the wording of part of a description template is changed to different words or numbers to obtain multiple instruction sentences, which are then inputted into the embedding unit to obtain multiple pieces of input vector data; by comparing the pieces of input vector data, a portion corresponding to these words or numbers can be identified among the input vector data. With a conversion pattern prepared based on the correspondence between a signal obtained in this way and input vector data, the conversion unit 732 can convert at least one of the sensor signal and a signal generated based on the sensor signal to a vector-format trajectory data signal.

By the conversion unit 732 generating a trajectory data signal in this way, the second computing device can generate a trajectory word signal without increasing the load of processing of the trained language model 721.

The trained language model 721, which is configured to generate an output word signal from an input word signal representing an utterance of an occupant of the vehicle 1 in natural language format, can also generate a trajectory word signal based on the trajectory data signal converted by the conversion unit 732. The signal generation system of the present disclosure need not include a dedicated trained language model for generating a trajectory word signal.

It should be noted that those skilled in the art can make various changes, substitutions, and modifications without departing from the spirit and scope of the present disclosure.

## Claims

1. A signal generation system (100) comprising:
a first computing device (6) configured to generate a trajectory signal representing a planned trajectory of a vehicle (1), based on a sensor signal outputted from a sensor (2) mounted on the vehicle; and
a second computing device (7) configured to generate an output word signal representing word information to be given to an occupant of the vehicle, by inputting an input word signal representing an utterance of the occupant in natural language format into a trained language model (721), wherein
at least one of the first computing device and the second computing device comprises a conversion unit (732) that converts at least one of the sensor signal and a signal generated based on the sensor signal to a trajectory data signal represented in a format that can be inputted into the trained language model, and
the second computing device generates a trajectory word signal related to the planned trajectory as the output word signal, based on the trajectory data signal.

2. The signal generation system according to claim 1, wherein
the signal generated based on the sensor signal includes the trajectory signal or a control signal for control of the vehicle based on the trajectory signal.

3. The signal generation system according to claim 2, wherein the format that can be inputted into the trained language model is natural language format.

4. The signal generation system according to claim 3, wherein
when the trajectory signal or the control signal includes a signal related to a predetermined action of the vehicle, the conversion unit adds a request signal to the trajectory data signal in the conversion, the request signal requesting that the trajectory word signal be given additional information corresponding to the predetermined action.

5. The signal generation system according to claim 1 or 2, wherein the trained language model includes an embedding unit that converts the input word signal to vector-format input vector data, and an output unit that outputs the output word signal, based on the input vector data, and
the format that can be inputted into the trained language model is vector format.

6. The signal generation system according to any one of claims 1 to 5, wherein
at least one of the first computing device and the second computing device comprises an adjustment unit (732) that adjusts the trained language model so as to be adapted to the trajectory data signal.

7. The signal generation system according to any one of claims 1 to 6, wherein
the signal generated based on the sensor signal includes an intermediate signal generated in a process of generating the trajectory signal.

8. A computing device (7) comprising a processor (73) configured to:
generate a first output word signal representing word information to be given to an occupant of a vehicle (1), by inputting an input word signal representing an utterance of the occupant in natural language format into a trained language model;
convert at least one of a sensor signal outputted from a sensor (2) mounted on the vehicle and a signal generated based on the sensor signal to a trajectory data signal represented in a format that can be inputted into the trained language model; and
generate a trajectory word signal related to a planned trajectory of the vehicle as a second output word signal, by inputting the trajectory data signal into the trained language model as the input word signal.

9. A signal generation method comprising:
generating a trajectory signal representing a planned trajectory of a vehicle (1), based on a sensor signal outputted from a sensor (2) mounted on the vehicle;
generating an output word signal representing word information to be given to an occupant of the vehicle, by inputting an input word signal representing an utterance of the occupant in natural language format into a trained language model (721);
converting at least one of the sensor signal and a signal generated based on the sensor signal to a trajectory data signal represented in a format that can be inputted into the trained language model; and
generating a trajectory word signal related to the planned trajectory as the output word signal, by inputting the trajectory data signal into the trained language model as the input word signal.
